# FASCICULE DE BREVET EUROPEEN

(11) **EP 3 308 960 B1**
(45) Date de publication et mention de la délivrance du brevet: **02.03.2022**
(21) Numéro de dépôt: 17194670.0
(22) Date de dépôt: 04.10.2017
(51) Int. Cl.: B33Y 80/00, F16N 19/00, F02C 7/06, B22F 3/105, F01D 25/18, F01M 11/00

(54) **RÉSERVOIR D'HUILE DE TURBOMACHINE**
ÖLTANK EINER TURBOMASCHINE
TURBOMACHINE OIL TANK

(30) Priorité: 13.10.2016 BE 201605768
(43) Date de publication de la demande: 18.04.2018
(73) Titulaire: Safran Aero Boosters SA, 4041 Herstal (BE)
(72) Inventeur: CLEYET, Florian, 4020 Liège (BE); BOUGELET, Stéphane, 5170 Profondeville (BE)
(74) Mandataire: Lecomte & Partners

(56) Documents cités:
- EP-A1- 2 808 595
- EP-A1- 3 121 417
- WO-A1-2014/210338
- WO-A2-2014/076315
- DE-A1-102009 034 566
- US-A- 3 316 692
- Anonymous: "Lockheed Martin Hopes to 3D Print Titanium Spacecraft Fuel Tanks In-House | 3DPrint.com | The Voice of 3D Printing / Additive Manufacturing", , 30 avril 2015 (2015-04-30), XP055384188, Extrait de l'Internet: URL:https://3dprint.com/62099/lockheed-3d- print-fuel-tanks/ [extrait le 2017-06-22]

## Description

### Domaine technique

L'invention concerne la fabrication d'un réservoir de turbomachine. Plus précisément, l'invention traite de la fabrication d'un réservoir métallique pour huile de turboréacteur. L'invention a également trait à une turbomachine axiale, notamment un turboréacteur d'avion ou un turbopropulseur d'aéronef. L'invention propose également un procédé de fabrication d'un réservoir

### Technique antérieure

La lubrification d'un turboréacteur repose sur une circulation continue d'huile. Cette huile emprunte un réseau dédié qui est connecté à un réservoir propre au turboréacteur. Ce réservoir forme à la fois le point de départ et l'arrivée du réseau. Par ailleurs, il offre un volume tampon qui compense une accumulation d'huile dans certaines zones, tout comme la consommation d'huile. Bien entendu, le réservoir doit rester fixé au turboréacteur malgré son niveau de remplissage et les vibrations.

A toutes fins utiles, rappelons que l'huile d'un turboréacteur atteint 180°C, et même 230°C dans certains scénarios. En réponse à ces contraintes, le réservoir comme le circuit doivent être pensés de sorte à résister durablement à ces attaques. En outre, l'huile présente des propriétés corrosives, notamment en raison de la présence d'additifs indispensables dans un turboréacteur.

Les documents FR 2 485 630 A1 et US 3 316 692 A divulguent un turboréacteur avec un carter supportant un réservoir d'huile à système antivibratoire. L'enveloppe du réservoir est traversée par un axe lié à des épaississements de l'enveloppe. Les extrémités de l'axe qui sortent de l'enveloppe forment des organes de fixation en prise souple avec le carter support du turboréacteur. L'axe forme un corps creux avec des collets usinés qui sont en contact des épaississements de l'enveloppe. En complément, une série de cloisons internes parallèles est liée à l'axe de manière à renforcer l'enveloppe. Un tel réservoir tend effectivement à montrer une certaine résistance aux vibrations, mais qui reste perfectible.

### Résumé de l'invention

### Problème technique

L'invention a pour objectif de résoudre au moins un des problèmes posés par l'art antérieur. Plus précisément, l'invention a pour objectif d'améliorer la résistance aux vibrations d'un réservoir d'huile de turboréacteur. L'invention a également pour objectif de proposer une solution simple, légère, économique, fiable, compacte, d'inspection aisée.

### Solution technique

L'invention a pour objet un réservoir de turboréacteur pour huile, le réservoir comprenant une chambre principale, une enveloppe délimitant la chambre principale, et une portion de fixation ; l'enveloppe comprenant une partie d'enveloppe par rapport à laquelle la portion de fixation fait saillie, notamment vers l'extérieur ; remarquable en ce que la partie d'enveloppe et la portion de fixation sont réalisées par fabrication additive par couches de sorte à être venues de matière.

La caractéristique technique précisant que la partie d'enveloppe et la portion de fixation sont réalisées par fabrication additive par couches de sorte à être venues de matière, n'est pas une caractéristique essentielle de l'invention. Elle peut être remplacée par l'une des caractéristiques suivantes.

Selon des modes particuliers de réalisation, le réservoir peut comprendre une ou plusieurs des caractéristiques suivantes, prises isolément ou selon toutes les combinaisons techniques possibles :

La portion de fixation comprend une première bride de fixation faisant saillie par rapport à la cloison, et éventuellement une deuxième bride de fixation faisant saillie par rapport à l'enveloppe, l'enveloppe comprenant éventuellement un socle formant une surépaisseur sur la partie d'enveloppe au niveau d'au moins une ou de chaque bride.

L'enveloppe présente une première zone de moindre épaisseur entre les deux brides de fixation et/ou à l'opposé des deux brides de fixation.

Au moins une ou chacune des deux brides de fixation comprend un bord libre incurvé.

Au moins une ou chacune des deux brides de fixation présente une forme de triangle, éventuellement asymétrique.

Selon l'invention le réservoir comprend un raidisseur interne prolongeant la portion de fixation, notamment une bride de fixation, vers la chambre ; ledit raidisseur interne, la partie d'enveloppe et la portion de fixation étant réalisés par fabrication additive de sorte à être venus de matière.

L'enveloppe comprend une extrémité avec une deuxième zone de moindre épaisseur, ladite extrémité étant éventuellement une extrémité inférieure du réservoir.

L'enveloppe comprend une ceinture de renfort ou une portion de ceinture de renfort, la ceinture de renfort ou la portion de ceinture de renfort, la partie d'enveloppe et la portion de fixation sont réalisées par fabrication additive de sorte à être venues de matière.

Le réservoir comprend au moins un équipement tel un évent, et/ou un désaérateur, et/ou un support de sonde, et/ou une crépine ; chaque équipement, la partie d'enveloppe et la portion de fixation étant réalisés par fabrication additive de sorte à être venus de matière.

La partie d'enveloppe est une première partie d'enveloppe, l' enveloppe comprenant en outre une deuxième partie d'enveloppe réalisée par fabrication additive par couches et soudée à la première partie d'enveloppe selon une soudure.

La chambre principale présente un allongement principal, la première soudure étant généralement perpendiculaire audit allongement principal.

La première partie d'enveloppe forme un fond du réservoir et/ou la deuxième partie d'enveloppe forme un couvercle de réservoir.

L'enveloppe comprend une face où la portion de fixation est disposée, et un amincissement à l'opposé de ladite face.

La chambre principale présente une forme générale de cylindre, éventuellement courbé.

Au moins une ou chacune des deux brides est jointe à la ceinture de renfort ou à la portion de ceinture de renfort.

Au moins ou chacune des deux brides est une plaque, notamment du même matériau que l'enveloppe.

Le raidisseur comprend un maillage occupant toute la chambre principale.

La matière de la partie d'enveloppe et de la portion de fixation présente un empilement de couches de matière selon une direction d'empilement qui est transversale à l'épaisseur de ladite partie d'enveloppe.

La partie d'enveloppe est monobloc.

Le raidisseur traverse la chambre interne, éventuellement horizontalement.

L'enveloppe comprend deux zones en surépaisseur qui sont chacune à la base d'une bride de fixation, et une troisième zone de moindre épaisseur séparant lesdites deux zones en surépaisseur.

L'enveloppe est métallique, par exemple en acier.

L'épaisseur minimale de l'enveloppe peut représenter moins de 75%, ou moins de 50%, ou moins de 25% de son épaisseur maximale. L'épaisseur maximale peut être mesurée en dehors des équipements, des brides, de la branche, du raidisseur, et éventuellement de la ceinture.

La portion de fixation est une première portion de fixation venue de matière avec la première partie d'enveloppe par fabrication additive, et le réservoir comprend en outre une deuxième portion de fixation ; par exemple avec la branche ; qui est venue de matière avec la deuxième partie d'enveloppe par fabrication additive respectivement.

L'invention a également pour objet un réservoir de turboréacteur, notamment pour huile, le réservoir comprenant une chambre principale, une enveloppe délimitant la chambre principale, et une portion de fixation ; l'enveloppe comprenant une partie d'enveloppe par rapport à laquelle la portion de fixation fait saillie, notamment vers l'extérieur ; remarquable en ce que la matière de la partie d'enveloppe et de la portion de fixation présente un empilement de couches de matière, notamment parallèles, selon une direction d'empilement qui est transversale à l'épaisseur de ladite partie d'enveloppe. Les couches peuvent s'observer dans la cristallographie de la matière.

L'invention a également pour objet un réservoir de turboréacteur pour huile ; le réservoir comprenant une chambre principale intérieure, une enveloppe qui délimite la chambre principale, une portion de fixation externe, et un raidisseur interne prolongeant la portion de fixation dans la chambre principale ; remarquable en ce que l'enveloppe comprend une jonction réalisée par fabrication additive de sorte à ce que la portion de fixation, l'enveloppe et le raidisseur soient venus de matière.

L'invention a également pour objet un turboréacteur comprenant un carter support et un réservoir d'huile avec une portion de fixation fixée au carter support, remarquable en ce que le réservoir d'huile est conforme à l'invention, préférentiellement le turboréacteur comprend circuit d'huile avec un palier et/ou un échangeur de chaleur, ledit circuit d 'huile communiquant avec ledit réservoir d'huile.

Selon un mode avantageux de l'invention, le carter support comprend des moyens de fixation fixés à la portion de fixation de manière isostatique.

L'invention a également pour objet un procédé de fabrication d'un réservoir d'huile de turboréacteur, le procédé comprenant une étape : (a) conception d'un réservoir d'huile avec une chambre principale, une enveloppe délimitant la chambre principale, et une portion de fixation ; l' enveloppe comprenant une partie d'où la portion de fixation fait saillie vers l'extérieur ; remarquable en ce qu'il comprend en outre une étape (b) fabrication additive par couches de la partie d'enveloppe et de la portion de fixation de sorte à être venues de matière, le réservoir étant éventuellement conforme à l'invention.

Selon des modes particuliers de réalisation, le procédé peut comprendre une ou plusieurs des caractéristiques suivantes, prises isolément ou selon toutes les combinaisons techniques possibles :

Lors de l'étape (b) fabrication additive la partie d'enveloppe est produite par secteurs dont un premier secteur avec une surface concave et un deuxième secteur avec une surface convexe ; lors de l'étape (b) fabrication additive la surface convexe est fabriquée dans la surface concave.

Lors de l'étape (b) fabrication additive les deux secteurs d' enveloppe sont empilés suivant leurs épaisseurs.

Lors de l'étape (b) fabrication additive les deux secteurs d' enveloppe sont écartés l'un de l'autre suivant leurs épaisseurs.

Lors de l'étape (b) fabrication additive la surface convexe épouse la surface concave.

La surface concave définit un volume interne dans lequel est fabriquée la surface convexe lors de l'étape (b) fabrication additive.

L'enveloppe comprend une troisième partie, éventuellement formée par une tôle d'épaisseur constante soudée à une autre partie d' enveloppe.

Le procédé comprend une étape (c) soudage des parties l'une à l' autre ou les unes aux autres.

La fabrication additive par couches est à base de poudre, par exemple de titane ou d'inconel.

La troisième partie est soudée entre la première partie d'enveloppe et la deuxième partie d'enveloppe.

De manière générale, les modes avantageux de chaque objet de l'invention sont également applicables aux autres objets de l'invention. Dans la mesure du possible, chaque objet de l'invention est combinable aux autres objets. Les objets de l'invention sont également combinables aux modes de réalisation de la description, qui en plus sont combinables entre eux.

### Avantages apportés

L'invention permet de lier les fixations avec l'enveloppe grâce à une continuité de matière homogène. Cette homogénéité de matière améliore l'endurance du réservoir et favorise la transmission d'efforts de l'enveloppe aux portions de fixation. Dès lors, ces dernières participent à renforcer l'enveloppe tout en préservant une certaine élasticité. Cet aspect s'améliore à nouveau lorsque des raidisseurs prolongent les portions de fixation vers l'intérieur.

### Brève description des dessins

La figure 1 représente un turboréacteur selon l'invention.
La figure 2 esquisse un carter de turboréacteur supportant un réservoir selon l'invention.
La figure 3 illustre une jonction d'enveloppe de réservoir d'huile selon l'invention.
La figure 4 présente un diagramme du procédé de fabrication du réservoir d'huile selon l'invention.
La figure 5 montre un lot de secteurs d'enveloppe produit par fabrication additive selon l'invention.

### Description des modes de réalisation

Dans la description qui va suivre, les directions employées correspondent au sens normal de montage. L'intérieur du réservoir se réfère à sa chambre, et l'extérieur à son environnement.

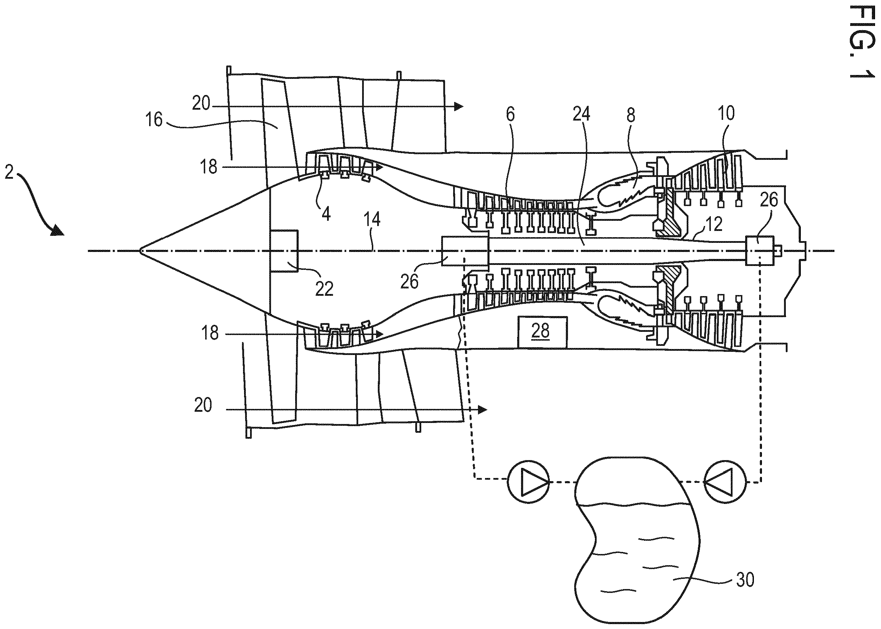

La figure 1 représente de manière simplifiée une turbomachine axiale. Il s'agit dans ce cas précis d'un turboréacteur double-flux. Le turboréacteur 2 comprend un premier niveau de compression, dit compresseur basse pression 4, un deuxième niveau de compression, dit compresseur haute pression 6, une chambre de combustion 8 et un ou plusieurs niveaux de turbines 10. En fonctionnement, la puissance mécanique des turbines 10 transmise via des arbres 24 jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée dans la chambre de combustion 8.

Un ventilateur d'arrivée communément désigné fan ou soufflante 16 est couplé au rotor 12. Il génère un flux d'air qui se divise en un flux primaire 18, et un flux secondaire 20 traversant un conduit annulaire. Un réducteur épicycloïdal 22, peut réduire la vitesse de rotation de la soufflante 16 et/ou du compresseur basse pression 4 par rapport au niveau de turbine 10 associé.

Le rotor 12 comporte plusieurs arbres 24 concentriques qui sont articulés de manière tournante via des paliers 26. Le refroidissement et/ou la lubrification sont assurés par un circuit d'huile. Ce circuit peut être propre au turboréacteur 2. Le circuit d'huile peut également comprendre un échangeur de chaleur 28 pour refroidir l'huile qui peut dépasser les 200°C, et même 230°C dans certains cas. Ces températures amplifient l'agressivité de l'huile corrosive vis-à-vis des joints et des parties polymères en général.

La position et l'orientation du réservoir 30 sont ici figuratives. En pratique, ce réservoir 30 peut être fixé au carter du turboréacteur 2. Par exemple, il peut être lié au carter de soufflante 16, au carter du compresseur basse pression 4, ou au carter du compresseur haute pression 6. Ces implantations tendent à rajouter des contraintes thermiques, et l'exposent directement aux vibrations du turboréacteur, notamment en cas de perte de pale de soufflante.

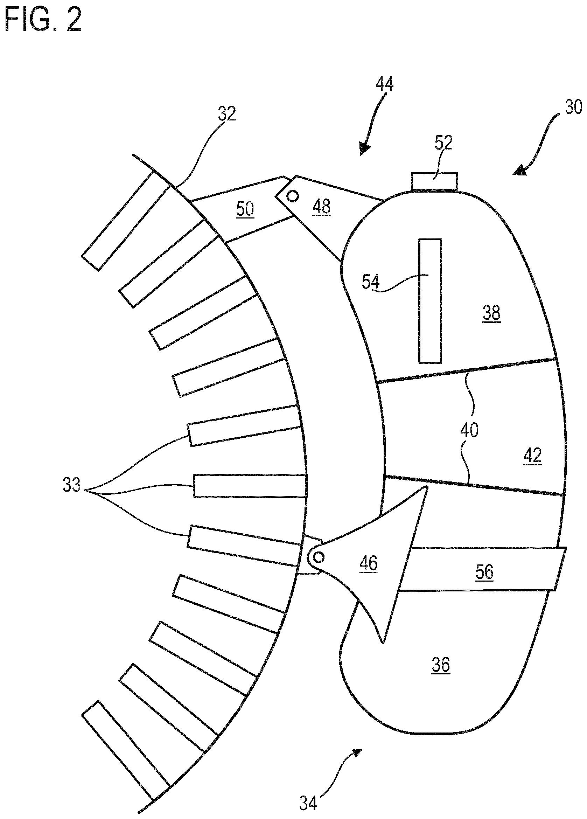

La figure 2 présente la fixation du réservoir d'huile 30 à un carter support 32 du turboréacteur. En l'occurrence, il peut s'agir du carter 32 du compresseur basse pression qui supporte également une rangée annulaire d'aubes concentriques 33. Le turboréacteur peut correspondre à celui de la figure 1.

Afin d'augmenter son volume utile, le réservoir 30 est essentiellement allongé tout en épousant la courbure extérieure du carter support 32. Cette compacité permet une implantation entre deux parois tubulaires rapprochées. En fonctionnement, le réservoir 30 est partiellement rempli d'huile, ou plus précisément d'un mélange d'huile, d'air et d'impuretés ; telles des particules métalliques abrasives relâchées par l'usure.

Le réservoir 30 présente une enveloppe 34 avec, par exemple, une partie inférieure 36 ou première partie 36, et une partie supérieure 38 ou deuxième partie 38. Ces parties (36 ; 38) peuvent être reliées par une soudure 40, ou via une partie centrale 42 de l'enveloppe 34 ; également appelée troisième partie 42 ; qui relie la partie inférieure 36 à la partie supérieure 38 via les soudures 40. Chaque soudure 40 peut former une boucle fermée autour de l'axe d'allongement général du réservoir. Grâce à ses parties (36 ; 38 ; 42), l'enveloppe 34, véritable peau, définit une chambre principale (non visible) formant un volume de stockage d'huile. La chambre est une chambre interne destine à être remplie. Le qualificatif « principal » de la chambre principale est entendu dans le sens où il s'agit du plus grand réceptacle du réservoir 30.

En matière de montage sur le carter support 32, le réservoir 30 montre une portion de fixation 44 faisant saillie par rapport à l'enveloppe 34, par exemple vers le carter 32. Cette portion de fixation 44 peut comprendre une ou au moins deux brides de fixation 46 (une bride visible cache l'autre). Ces brides 46 peuvent être solidaires de la partie inférieure 36. Les brides 46 peuvent être liées à des épaississements de la cloison 34 formant des socles renforcés et écartés. De son côté, la partie supérieure 38 peut présenter une branche de fixation 48, par exemple liée au carter 32 via un bras rotulé 50. La branche 48 et les brides de fixation 46 peuvent être liées au carter 32 de sorte à permettre une fixation isostatique. C'est à-dire qu'elles suppriment respectivement et uniquement, un, deux et trois degrés de liberté lorsqu'elles sont fixées aux moyens de fixation complémentaires du carter 32. Les six degrés de liberté du réservoir sont ainsi figés. Ceci tend à réduire les effets de la dilatation, et limite les contraintes internes.

Le réservoir 30 peut comprendre d'autres équipements. Par exemple, il peut comprendre des orifices d'entrée et de sortie (non représentés). Un bouchon 52 peut être placé en partie supérieure 38, par exemple à son sommet. Une fenêtre de visualisation 54 du niveau peut être formée dans la partie supérieure 38. Un déserteur, un évent, et/ou un déshuileur (non représentés) peuvent être associés au réservoir 30.

Le réservoir 30 est avantageusement produit par fabrication additive, au moins partiellement. Par exemple au moins une partie, telle la première partie 36 et éventuellement la deuxième partie 38 sont produites par fabrication additive de manière séparée. Elles pourraient être produites ensemble afin d'être venues de matière. La troisième partie 42 est optionnellement produite par fabrication additive. En variante, elle est formée par une tôle issue de laminage, par exemple d'épaisseur constante. Son épaisseur peut être inférieure à l'épaisseur de l'enveloppe 34 dans la première et la deuxième partie. L'épaisseur de l'enveloppe 34 peut varier entre 2mm et 0,5mm, ou de 1,5mm à 1mm.

En outre, les brides de fixations 46 peuvent être venues de matière avec la partie inférieure 36 de l'enveloppe 34, et en particulier produites par fabrication additive avec l'enveloppe 34 afin d'améliorer la liaison entre chaque bride et l'enveloppe 34. L'ajout de rayons de raccordement y augmente à nouveau la transmission d'efforts, et réduit le risque d'apparition de fissures par fatigue. Optionnellement, le réservoir 30 présente une ceinture 56 à l'extérieur. Celle-ci relie les brides 46 et forme une surépaisseur localisée sur l'enveloppe 34.

Chaque bride de fixation 46 peut généralement décrire un triangle. Les côtés en regard du carter 32, soit vers le creux de la forme courbée du réservoir 30, peuvent être incurvés. Ceci les affine, et permet de les allonger tout en préservant la légèreté. Par ailleurs, les extrémités de fixation de la portion de fixation 44 sont écartées les unes des autres afin d'accroitre la stabilité du réservoir 30.

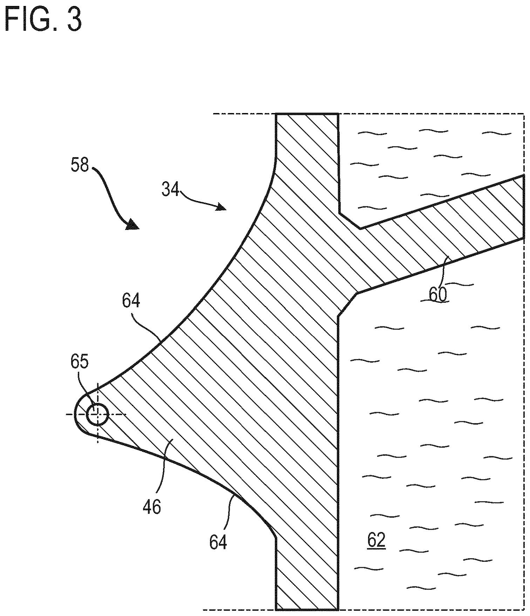

La figure 3 présente en coupe une zone où l'enveloppe 34 forme une jonction 58 qui relie une bride de fixation 46 à un raidisseur interne 60 s'étendant dans la chambre principale 62. Bien qu'une seule bride 46 ne soit représentée, le présent enseignement peut s'appliquer à chaque bride 46 du réservoir.

L'enveloppe 34 devient un intercalaire entre le raidisseur 60 et la bride 46 qui s'étendent vers l'opposé l'un de l'autre. Les côtés 64 en creux du triangle que forme la bride 46 sont en évidence ; ils peuvent devenir tangents à l'enveloppe 34. Un orifice de fixation 65 est visible dans la bride 46.

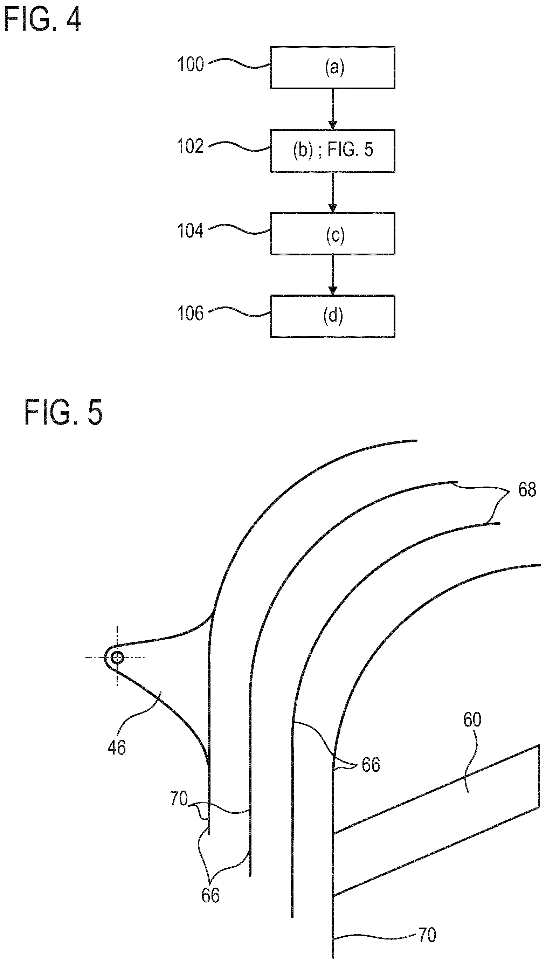

La figure 4 est un diagramme du procédé de fabrication du réservoir d'huile tel que celui présenté en relation avec les figures précédentes.

Le procédé peut comprendre les étapes suivantes, éventuellement réalisées dans l'ordre introduit ci-dessous :
(a) conception 100 d'un réservoir d'huile de turboréacteur en prenant en compte une durée de vie d'au moins 25 ans et des contraintes de fonctionnement ;
(b) fabrication additive 102 par couches à base de poudre d'au moins une, ou d'au moins deux, ou de chaque partie d'enveloppe, et de la portion de fixation ;
(c) soudage 104 des parties l'une à l'autre ou les unes aux autres ;
(d) finition 106 du réservoir, dont le sablage et le traitement de l'enveloppe ; cette étape (d) finition 106 restant entièrement optionnelle.

Lors de l'étape (a) conception 100, différents secteurs sont définis. Il peut s'agir de secteurs angulaires. Leur réunuion peut permettre de réaliser la première partie d'enveloppe et/ou la deuxième partie d'enveloppe.

L'étape (b) fabrication additive 102 peut être une fabrication par balayage d'un lit de poudre par un faisceau d'électrons, ou par un rayon laser. L'étape (b) fabrication additive 102 est effectuée dans une poche sur un plateau mobile d'une machine où le lit de poudre est renouvelé puis précompacté avant solidification des différentes couches superposées. Lors de cette étape, la poudre peut être préchauffée, par exemple à 700°C. La poudre brute peut avoir une granulométrie de 20µm.

L'étape (b) fabrication additive 102 peut être configurée de manière à générer un empilement de couches de matière. Cet empiliment, ou superposition, peut être orienté de traver, ou perpendiculairement à l'épaisseur de la partie d'enveloppe et à la portion de fixation, notamment là où elles se réunissent. Les couches peuvent être visibles dans les particules ou les cristaux de matières. Elles peuvent résulter d'un processus thermique, notamment d'une solidification.

La figure 5 esquisse un résultat intermédiaire de l'étape (c) fabrication additive du procédé de la figure 4. Elle montre un lot de secteurs 66 d'enveloppe produit en même temps dans une machine de fabrication additive. Les secteurs 66 sont représentés en coupe.

Ce lot forme un bloc dont la taille optimise l'occupation de la poche de fabrication de la machine de fabrication additive afin d'augmenter la cadence. Dans ce bloc, les secteurs 66 sont imbriqués les uns dans les autres. Ces secteurs 66 présentent des surfaces concaves et des surfaces convexes. Afin de gagner en compacité, les surfaces convexes sont dans les surfaces concaves en s'épousant les unes les autres. Les brides 46 et le raidisseur 60 peuvent être fabriqués vers l'extérieur du bloc.

Les secteurs 66 peuvent être des huitièmes de sphère 68 ; éventuellement avec un prolongement vertical 70.

## Revendications

1. Réservoir (30) de turboréacteur (2) pour huile, le réservoir (30) comprenant une chambre principale (62), une enveloppe (34) délimitant la chambre principale (62), et une portion de fixation (44) ; l'enveloppe (34) comprenant une partie (36 ; 38) d'enveloppe par rapport à laquelle la portion de fixation (44) fait saillie, notamment vers l'extérieur de la chambre;
**caractérisé en ce que**
la partie (36 ; 38) d'enveloppe et la portion de fixation (44) sont réalisées par fabrication additive par couches de sorte à être venues de matière, et **en ce que** le réservoir comprend un raidisseur interne (60) prolongeant la portion de fixation (44), notamment une bride de fixation (46), vers la chambre principale (62) ; ledit raidisseur interne (60), la partie (36 ; 38) d'enveloppe (34) et la portion de fixation (44) étant réalisés par fabrication additive de sorte à être venus de matière.

2. Réservoir (30) selon la revendication 1, **caractérisé en ce que** la portion de fixation (44) comprend une première bride de fixation (46) faisant saillie par rapport à la cloison, et éventuellement une deuxième bride de fixation (46) faisant saillie par rapport à l'enveloppe (34), l'enveloppe (34) comprenant éventuellement un socle formant une surépaisseur sur la partie (36 ; 38) d'enveloppe (34) au niveau d'au moins une ou de chaque bride (46).

3. Réservoir (30) selon la revendication 2, **caractérisé en ce que** l'enveloppe (34) présente une première zone de moindre épaisseur entre les deux brides de fixation (46) et/ou à l'opposé des deux brides de fixation (46).

4. Réservoir (30) selon l'une des revendications 2 à 3, **caractérisé en ce qu'**au moins une ou chacune des deux brides de fixation (46) comprend un bord (64) libre incurvé, et/ou au moins une ou chacune des deux brides de fixation (46) présente une forme de triangle, éventuellement asymétrique.

5. Réservoir (30) selon l'une des revendications 1 à 4, **caractérisé en ce que** la matière de la partie (36 ; 38) d'enveloppe et de la portion de fixation (44) présente un empilement de couches de matière selon une direction d'empilement qui est transversale à l'épaisseur de ladite partie d'enveloppe (34).

6. Réservoir (30) selon l'une des revendications 1 à 5, **caractérisé en ce que** l'enveloppe (34) comprend une ceinture de renfort (56) ou une portion de ceinture de renfort, la ceinture de renfort (56) ou la portion de ceinture de renfort, la partie (36 ; 38) d'enveloppe et la portion de fixation (44) sont réalisées par fabrication additive de sorte à être venues de matière.

7. Réservoir (30) selon l'une des revendications 1 à 6, **caractérisé en ce que** la partie d'enveloppe est une première partie (36) d'enveloppe, l'enveloppe (34) comprenant en outre une deuxième partie (38) d'enveloppe réalisée par fabrication additive par couches et soudée à la première partie (36) d'enveloppe selon une soudure (40).

8. Réservoir (30) selon la revendication 7, **caractérisé en ce que** la première partie (36) d'enveloppe forme un fond du réservoir (30) et/ou la deuxième partie (38) d'enveloppe forme un couvercle de réservoir (30).

9. Réservoir (30) de turboréacteur (2) pour huile, le réservoir (30) comprenant une chambre principale (62), une enveloppe (34) délimitant la chambre principale (62), et une portion de fixation (44) ; l'enveloppe (34) comprenant une partie (36 ; 38) d'enveloppe par rapport à laquelle la portion de fixation (44) fait saillie, notamment vers l'extérieur de la chambre;
**caractérisé en ce que**
la matière de la partie (36 ; 38) d'enveloppe et de la portion de fixation (44) comprennent un empilement de couches avec une direction d'empilement des couches qui est transversale à l'épaisseur de l'enveloppe (34) ; le réservoir étant éventuellement conforme à l'une des revendications 1 à 8.

10. Turboréacteur (2) comprenant un carter support (32) et un réservoir (30) d'huile avec une portion de fixation (44) fixée au carter support (32), **caractérisé en ce que** le réservoir d'huile (30) est conforme à l'une des revendications 1 à 9, préférentiellement le turboréacteur (2) comprend circuit d'huile avec un palier (26) et/ou un échangeur de chaleur (28), ledit circuit d'huile communiquant avec ledit réservoir d'huile (30), et/ou le carter support (32) comprend des moyens de fixation fixés à la portion de fixation (44) de manière isostatique.

11. Procédé de fabrication d'un réservoir (30) d'huile de turboréacteur (2), le procédé comprenant une étape :
(a) conception (100) d'un réservoir (30) d'huile avec une chambre principale (62), une enveloppe (34) délimitant la chambre principale (62), et une portion de fixation (44); l'enveloppe (34) comprenant une partie (36 ; 38) d'où la portion de fixation (44) fait saillie vers l'extérieur ;
**caractérisé en ce qu'**il comprend en outre une étape
(b) fabrication additive (102) par couches de la partie (36; 38) d'enveloppe et de la portion de fixation (44) de sorte à être venues de matière, le réservoir (30) étant conforme à l'une des revendications 1 à 9.

12. Procédé selon la revendication 11, **caractérisé en ce que** lors de l'étape (b) fabrication additive (102) la partie (36 ; 38) d'enveloppe est produite par secteurs (66) dont un premier secteur (66) avec une surface concave et un deuxième secteur (66) avec une surface convexe ; lors de l'étape (b) fabrication additive la surface convexe est fabriquée dans la surface concave.

13. Procédé selon l'une des revendications 11 à 12, **caractérisé en ce que** l'enveloppe (34) comprend une troisième partie (42), éventuellement formée par une tôle d'épaisseur constante soudée à une autre partie d'enveloppe (36 ; 38).

14. Procédé selon l'une des revendications 11 à 13, **caractérisé en ce qu'**il comprend une étape (c) soudage (104) des parties (36 ; 38 ; 42) l'une à l'autre ou les unes aux autres.

## Patentansprüche

1. Behälter (30) für Öl eines Turbostrahltriebwerks (2), wobei der Behälter (30) eine Hauptkammer (62), ein die Hauptkammer (62) begrenzendes Gehäuse (34) und einen Befestigungsabschnitt (44) umfasst, wobei das Gehäuse (34) ein Gehäuseteil (36; 38) umfasst, gegenüber dem der Befestigungsabschnitt (44) insbesondere zur Außenseite der Kammer vorsteht,
**dadurch gekennzeichnet, dass**
das Gehäuseteil (36; 38) und der Befestigungsabschnitt (44) durch additive Fertigung schichtweise stoffschlüssig hergestellt sind, und dass der Behälter eine den Befestigungsabschnitt (44) verlängernde innere Versteifung (60) aufweist, insbesondere einen Befestigungsflansch (46) zu der Hauptkammer (62) hin, wobei die innere Versteifung (60), der Teil (36; 38) des Gehäuses (34) und der Befestigungsabschnitt (44) durch additive Fertigung hergestellt werden, um stoffschlüssig zu sein.

2. Behälter (30) nach Anspruch 1, **dadurch gekennzeichnet, dass** der Befestigungsabschnitt (44) einen ersten Befestigungsflansch (46) umfasst, der von der Trennwand vorsteht, und optional einen zweiten Befestigungsflansch (46), der von dem Gehäuse (34) vorsteht, wobei das Gehäuse (34) optional eine Basis umfasst, die eine zusätzliche Dicke am Teil (36; 38) des Gehäuses (34) in Höhe von mindestens einem oder jedem Flansch (46) bildet.

3. Behälter (30) nach Anspruch 2, **dadurch gekennzeichnet, dass** das Gehäuse (34) eine erste Zone geringerer Dicke zwischen den beiden Befestigungsflanschen (46) und / oder gegenüber den beiden Befestigungsflanschen (46) aufweist.

4. Behälter (30) nach einem der Ansprüche 2 bis 3, **dadurch gekennzeichnet, dass**, mindestens einer oder jeder der beiden Befestigungsflansche (46) eine freie gebogene Kante (64) aufweist und/oder mindestens einer oder jeder der beiden Befestigungsflansche (46) eine Dreiecksform aufweist, die gegebenenfalls asymmetrisch ist.

5. Behälter (30) nach einem der Ansprüche 1 bis 4, **dadurch gekennzeichnet, dass** das Material des Gehäuseteils (36; 38) und des Befestigungsteils (44) einen Stapel von Materialschichten in einer Stapelrichtung darstellt, die quer zur Dicke des Teils des Gehäuses (34) verläuft.

6. Behälter (30) nach einem der Ansprüche 1 bis 5, **dadurch gekennzeichnet, dass** das Gehäuse (34) einen Verstärkungsgürtel (56) oder einen Verstärkungsgürtelabschnitt umfasst, der Verstärkungsgürtel (56) oder der Verstärkungsgürtelabschnitt, wobei der Teil (36; 38) des Gehäuses und der Befestigungsabschnitt (44) durch additive Fertigung stoffschlüssig hergestellt sind.

7. Behälter (30) nach einem der Ansprüche 1 bis 6, **dadurch gekennzeichnet, dass** das Gehäuseteil ein erstes Gehäuseteil (36) ist, wobei das Gehäuse (34) ferner ein zweites Gehäuseteil (38) umfasst, das durch additive Fertigung in Schichten hergestellt und mit dem ersten Gehäuseteil (36) durch eine Schweißnaht (40) verschweißt ist.

8. Behälter (30) nach Anspruch 7, **dadurch gekennzeichnet, dass** das erste Gehäuseteil (36) einen Boden des Behälters (30) bildet und / oder das zweite Gehäuseteil (38) einen Behälterdeckel (30) bildet.

9. Behälter (30) für Öl eines Turbostrahltriebwerks (2), wobei der Behälter (30) eine Hauptkammer (62), einen die Hauptkammer (62) begrenzendes Gehäuse (34) und einen Befestigungsabschnitt (44) umfasst, wobei das Gehäuse (34) ein Gehäuseteil (36; 38) umfasst, gegenüber dem der Befestigungsabschnitt (44) insbesondere zur Außenseite der Kammer vorsteht,
**dadurch gekennzeichnet, dass**
das Material des Gehäuseteils (36; 38) und des Befestigungsabschnitt (44) einen Stapel von Schichten in einer Stapelrichtung umfasst, die quer zur Dicke des Teils des Gehäuses (34) verläuft, wobei der Behälter gegebenenfalls einem der Ansprüche 1 bis 8 entspricht.

10. Turbostrahltriebwerk (2), ein Stützgehäuse (32) und einen Behälter (30) für Öl mit einem Befestigungsabschnitt (44) umfassend, der an dem Stützgehäuse befestigt ist, **dadurch gekennzeichnet, dass** der Behälter (30) für Öl einem der Ansprüche 1 bis 9 entspricht, wobei das Turbostrahltriebwerk (2) vorzugsweise einen Ölkreislauf mit einem Lager (26) und / oder einem Wärmetauscher (28) umfasst, wobei der Ölkreislauf mit dem Ölbehälter (30) kommuniziert, und/oder das Stützgehäuse (32) Befestigungsmittel umfasst, die isostatisch am Befestigungsabschnitt (44) befestigt sind.

11. Verfahren zur Herstellung eines Behälters (30) für Öl eines Turbostrahltriebwerks (2), wobei das Verfahren einen Schritt umfasst:
(a) Entwurf (100) eines Behälters (30) für Öl mit einer Hauptkammer (62), einem die Hauptkammer (62) begrenzenden Gehäuse (34) und einem Befestigungsabschnitt (44), wobei das Gehäuse (34) einen Teil (36; 38) umfasst, von dem der Befestigungsabschnitt (44) nach außen vorsteht,
**dadurch gekennzeichnet, dass**
sie ferner einen Schritt der (b) additiven Fertigung (102) durch stoffschlüssige Schichten des Gehäuseteils (36; 38) und des Befestigungsabschnitts (44) umfasst, wobei der Behälter (30) einem der Ansprüche 1 bis 9 entspricht.

12. Verfahren nach Anspruch 11, **dadurch gekennzeichnet, dass**, während des Schritts (b) der additiven Fertigung (102) das Gehäuseteil (36; 38) durch Sektoren (66) erzeugt wird, die einen ersten Sektor (66) mit einer konkaven Oberfläche und einen zweiten Sektor (66) mit einer konvexen Oberfläche umfassen, wobei während des Schritts (b) der additiven Fertigung die konvexe Oberfläche in der konkaven Oberfläche erzeugt wird.

13. Verfahren nach einem der Ansprüche 11 bis 12, **dadurch gekennzeichnet, dass** das Gehäuse (34) einen dritten Teil (42) umfasst, der wahlweise aus einem Blech konstanter Dicke gebildet ist, das an ein anderes Gehäuseteil (36; 38) angeschweißt ist.

14. Verfahren nach einem der Ansprüche 11 bis 13, **dadurch gekennzeichnet, dass** es einen Schritt (c) des Schweißens (104) umfasst, wobei die Teile (36, 38, 42) aneinander oder miteinander verschweißt werden.

## Claims

1. Oil tank (30) for a turbojet engine (2), the tank (30) comprising a principal chamber (62), an envelope (34) delimiting the principal chamber (62), and a fixing portion (44); the envelope (34) comprising an envelope part (36; 38) relative to which the fixing portion (44) projects, especially towards the exterior of the chamber;
**characterized in that**
the envelope part (36; 38) and the fixing portion (44) are produced by layered additive fabrication so as to be in one piece,
and **in that** the tank comprises an internal stiffener (60) extending the fixing portion (44), especially a fixing flange (46), toward the principal chamber (62); said internal stiffener (60), the envelope part (36; 38) of the envelope (34) and the fixing portion (44) being produced by additive fabrication so as to be in one piece.

2. Tank (30) according to claim 1, **characterized in that** the fixing portion (44) comprises a first fixing flange (46) projecting relative to the partition, and possibly a second fixing flange (46) projecting relative to the envelope (34), the envelope (34) optionally comprising a base forming an increased thickness on the envelope part (36; 38) of the envelope (34) at the level of at least one or each flange (46).

3. Tank (30) according to claim 2, **characterized in that** the envelope (34) presents a thinner first zone between the two fixing flanges (46) and/or opposite the two fixing flanges (46).

4. Tank (30) according to any one of claims 2 and 3, **characterized in that** at least one or each of the two fixing flanges (46) comprises a curved free edge (64), and/or at least one or each of the two fixing flanges (46) presents a triangular, possibly asymmetrical shape.

5. Tank (30) according to any one of claims 1 to 4, **characterized in that** the material of the envelope part (36; 38) and of the fixing portion (44) presents a stack of material layers in a stacking direction which is transverse to the thickness of said envelope (34) part .

6. Tank (30) according to any one of claims 1 to 5, **characterized in that** the envelope (34) comprises a reinforcing belt (56) or a reinforcing belt portion, the reinforcing belt (56) or the reinforcing belt portion, the envelope part (36; 38) and the fixing portion (44) are produced by additive fabrication so as to be in one piece.

7. Tank (30) according to any one of claims 1 to 6, **characterized in that** the envelope part is a first envelope part (36), the envelope (34) further comprising a second envelope part (38) produced by layered additive fabrication and welded to the first envelope part (36) by a weld (40).

8. Tank (30) according to claim 7, **characterized in that** the first envelope part (36) forms a bottom of the tank (30) and/or the second envelope part (38) forms a lid of the tank (30).

9. Oil tank (30) for turbojet engines (2), the tank (30) comprising a principal chamber (62), an envelope (34) delimiting the principal chamber (62), and a fixing portion (44); the envelope (34) comprising an envelope part (36; 38) relative to which the fixing portion (44) projects, especially towards the exterior of the chamber;
**characterized in that**
the material of the envelope part (36; 38) and the fixing portion (44) comprises a stack of layers with a layer stacking direction that is transverse to the thickness of the envelope (34), the tank being optionally according to any one of claims 1 to 8.

10. Turbojet engine (2) comprising a supporting casing (32) and an oil tank (30) with a fixing portion (44) fixed to the supporting casing (32), **characterized in that** the oil tank (30) is according to any one of claims 1 to 9, the turbojet engine (2) preferably comprises an oil circuit with a bearing (26) and/or a heat exchanger (28), said oil circuit communicating with said oil tank (30), and/or the supporting casing (32) comprising fixing means fixed to the fixing portion (44) isostatically.

11. Method of fabricating an oil tank (30) of a turbojet engine (2), the method comprising a step of:
(a) designing (100) an oil tank (30) with a principal chamber (62), an envelope (34) delimiting the principal chamber (62), and a fixing portion (44); the envelope (34) comprising a part (36; 38) from which the fixing portion (44) projects outwards;
**characterized in that** it further comprises a step
(b) of layered additive fabrication (102) of the envelope part (36; 38) and the fixing portion (44) so as to be in one piece, the tank (30) being according to any one of claims 1 to 9.

12. Method according to Claim 11, **characterized in that** during the additive fabrication step (b) (102) the envelope part (36; 38) is produced sector by sector (66) including a first sector (66) with a concave surface and a second sector (66) with a convex surface; during the additive fabrication step (b) the convex surface is made in the concave surface.

13. Method according to any one of claims 11 to 12, **characterized in that** the envelope (34) comprises a third part (42), optionally formed by a metal plate of constant thickness welded to another envelope part (36; 38).

14. Method according to any one of claims 11 to 13, **characterized in that** it comprises a welding step (c) (104) the parts (36; 38; 42) to one another.
